# EUROPEAN PATENT SPECIFICATION

(11) **EP 1 714 916 B1**
(45) Date of publication and mention of the grant of the patent: **10.09.2008**
(21) Application number: 06007975.3
(22) Date of filing: 18.04.2006
(51) Int. Cl.: B65G 13/00, B65G 47/74, G01N 23/04

(54) **Device for recirculating containers at a baggage inspection apparatus**
Vorrichtung zum Rückführen von Behältern an einer Gepäckinspektionseinrichtung
Dispositif de recirculation de conteneurs à un appareil d'inspection de bagages

(30) Priority: 20.04.2005 IT UD20050012 U
(43) Date of publication of application: 25.10.2006
(73) Proprietor: AEROPORTO DI VENEZIA MARCO POLO S.p.A. SAVE, 30030 Tessera VE (IT)
(72) Inventor: Soppani, Massimo, 30030 Tessera VE (IT)
(74) Representative: D'Agostini, Giovanni

(56) References cited:
- EP-A- 0 963 925
- US-A- 3 392 813

## Description

### Object

This object relates to an apparatus for the movement of containers at a people-access check point, according to the characteristics of the pre-characterizing part of the main claim. Particularly it refers to the container transfer system to check with X-rays in the departure passages in airports.

### Domain of the object

The domain of the object substantially, although not limitedly, refers to the container transfer system to check with X-rays in the departure passages of airports.

### Background art

At the present state of the art, various systems are known that aim to ease the movement of personal belongings and hand-luggage for the passing with X-rays in airport control accesses.

It is known that people pass through a control door with X-rays to identify possible objects not admitted inside the airport and inside aeroplanes.

It is also known that beside this control door an additional checking apparatus is found, consisting of a continuously advancing conveyor belt at waist level, which passes through a control tunnel with X - rays.

In this way the person that must pass through the check point deposits his hand luggage and possible clothes and personal belongings not admitted on his person, onto this conveyor belt for separate checking, equipped with very sophisticated checking means, also with monitoring by specialized operators.

To ease the deposit of clothes that otherwise could be damaged by the conveyor belt or to avoid small personal belongings falling into the plant or being stopped in the tunnel, containers, generally plastic, are provided, placed above said X-ray tunnels or on special boards alongside the conveyor belt, into which containers, the person places his clothes and/or personal belongings.

The container is therefore placed by the same person onto said conveyor belt, then the person passes through said control door while said container passes laterally inside said control tunnel (station) and both exit on the other side of the control area.
On the other side of the control area an idle roller line is arranged at the exit of the tunnel, namely at the end of said conveyor belt, where said hand-luggage and said containers accumulate.

The person concerned takes his luggage and personal belongings from said container and goes off inside the terminal building.

At present control operators are obliged to manually take these containers and transfer them, still manually, to the opposite side of the check point line again, namely, in such a position as to allow an easy taking by other people who are waiting to pass through the check point and who must therefore repeat such operation.

This type of operation, when dealing with a large number of people who must pass through the check point, is long, tedious and tiring.

This, even more, causes the lengthening of control times, for which the queue for passing through security control is notorious, a queue that often causes the user even to miss his flight. Rollert conveyors are well known, but none of them singularly nor in combination, solve cited problems:
EP-A-0963925 discloses a sorting apparatus using a collection bench (170) for automatic handling of baggage, having turn-table to 90°-drive-off certain baggage.
US-A-3392813 discloses a gravity conveyor including a first, downwardly, inclined track upon which tote pans travel. The track extends to a second, separate swingable track portion retrained in an upward position by magnetic means. The swingable track portion retains each tote pan until the same is loaded. The weight of a filled pan counteracts the actractive force of the magnetic means thereby causing the swingable track portion to swing downwardly to a position of alignment with a third, downwardly inclined track. Latching means of the first and second track portions insure the orderly loading and movement to move one tote pan at time through the conveyor.

### Aim of this object and problem to be solved

The problem to be solved and the aim of this object is that of substantially simplifying the movement of said containers and therefore simplifying operations and in conclusion also to reduce control waiting times, speeding up the whole system by means of an almost automatic movement of said containers.

### Solution of the problem and inventive concept

The problem is solved according to the characteristics of the main claim.
The sub-claims represent preferred embodiments.

### Advantages

In this way there is the great advantage of considerably simplifying the movement of said containers and reducing operative times, and this at an extremely contained cost, and in an extremely simple, sure and reliable way.

### Description of a preferred solution

The object will now be understood better with the help of the drawings wherein:

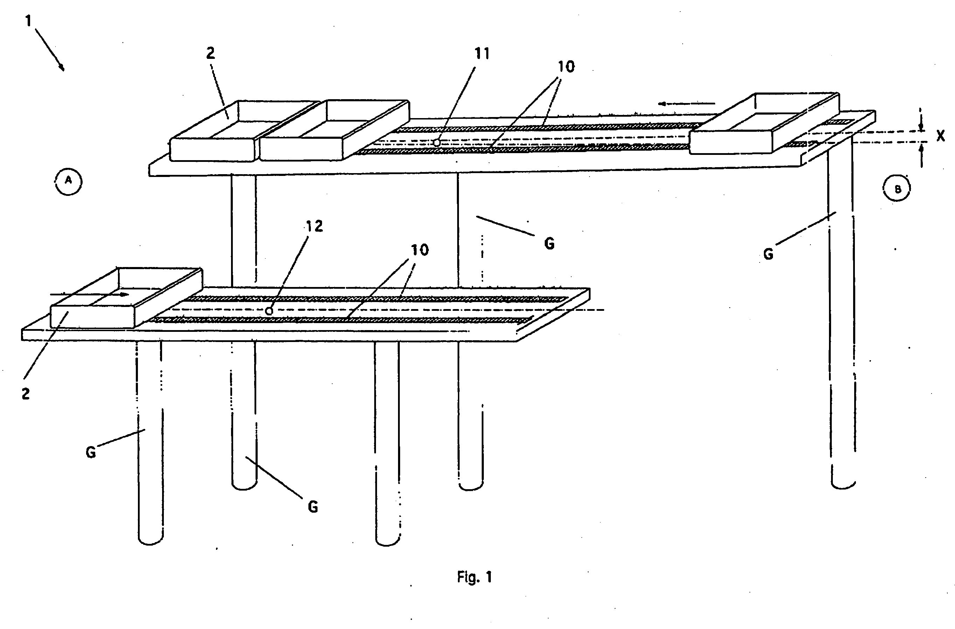

Fig.1 represents a view of the apparatus of the two tracks with double rows of rollers;

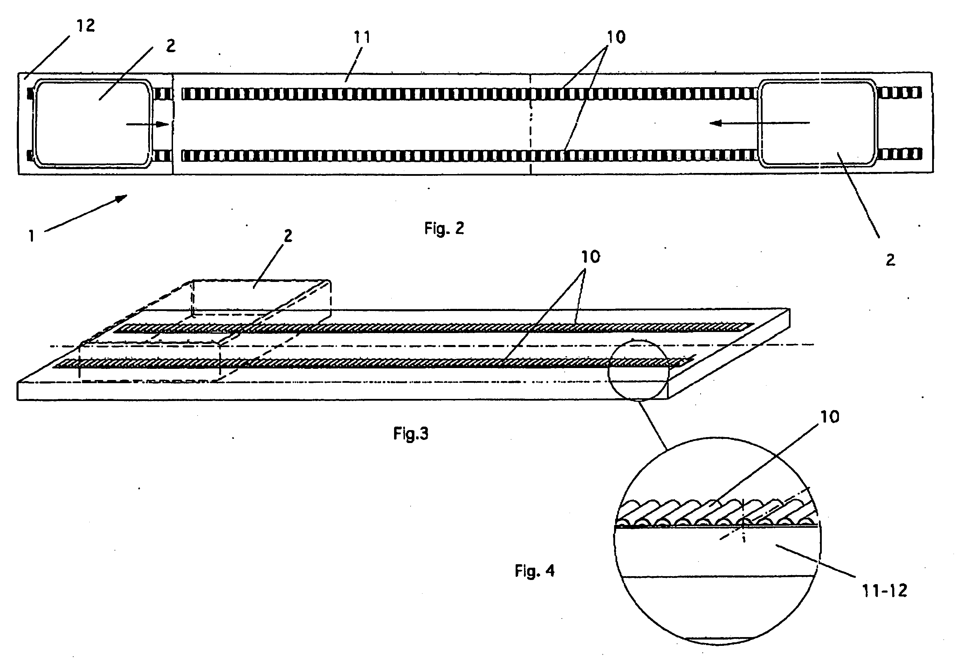

Fig.2 represents the plan-view of one of the two tracks;
Fig.3 represents a perspective view of one of the two tracks and
Fig.4 represents an enlarged detail of a roller track of the previous figure.

### Detailed description of the solution

The present solution, as is seen from the figures, includes substantially two overlapping tracks, one high (11) and one low (12). The high one (11) is substantially longer than the lower (12) and protrudes substantially at least on one side (B), controlled area side.
Each track (11-12) includes a double row of rollers, forming idle roller lines (10).

The width of the tracks is substantially equal to, or a little more than the respective prismatic plastic containers (2) for placing personal belongings.

The upper track is slightly inclined and the flowability of the rollers in relation to the inclination is such that the flowability ratio, roller (10)/inclination (X) is such that the loaded containers in the upstream point (B) drop by themselves toward the downstream point (A). The downstream point is intended as being on the outside of the check point area, namely within reach of the next user to be checked.

In this way, once the container (2) has been passed from the loading side of the airport and emptied by the user, the assigned control operator has only to move the container (2) onto the inclined upper track (11, side B) and the empty container will automatically descend again to the side of the users that have yet to pass the check point.

The user will take one of the empty containers from the upper track (11) and will move it onto the horizontal lower track (12), putting his personal belongings inside, and will accompany it to the entry of the conveyor belt of the X-ray control line.

In this way everything is simplified and speeded-up, without the possibility of obstacles, consequently speeding up queues at the check point.

It will be noted that though the tracks are one above the other, there are no uprights on the user side that interfere with the access to the underlying track. In this way, the upper track is substantially supported i n a cantilever feature and, with this, making the access above the underlying track (12) completely open space.

## Claims

1. Apparatus for the movement of containers at a people-access check point of the roller type (10), **characterised in that:**
i - it consists of two tracks, one (11) above the other (12);
ii - the overlying track (11) is inclined with a "X" incline value such that the resistance to the flowing of the rollers (10) is exceeded by said "X" inclination in such a way so that a container (2) placed above said inclined track (11), and left free in an upstream position (B), is automatically moved downwards (A) for free flowing with gravity,
iii, - the distance between the two tracks is higher than the height of the respective container (2) which must be moved.
iv. - said upper track (11) protrudes on one side (B) with respect to the lower track (12).
v. - the protrusion of the upper track (11) is on the side inside the check point area, while the opposite side is extended at least beyond the check point area.
vi. - said upper track (11) has support uprights only on one side at least in the area concerned also with the underlying track (12), in order to leave access absolutely free without uprights at the area between the underlying track (12) and the track above (11).
vii. - on the user side, namely external to the check point area (A) both heads of said tracks (11,12) are found.
viii. - the height of the lower track (12) is substantially equal in height to the intake track of said containers (2) in the conveyor belt track of the control station with X-rays to check the personal belongings contained i n said container (2).
ix. - the positioning of the said tracks (11,12) with the check-point and working being conceived in such a way that:
a)- before check point the user can take one of the empty containers (2) from the upper track (11) and will move it onto the horizontal lower track (12), putting his personal belongings inside, and will accompany it to the entry of the conveyor belt of the X-ray control line;
b)- once the container (2) has been passed from the loading side of the airport and emptied by the user, the assigned control operator has only to move the container (2) onto the inclined upper track (11, side B) and the empty container will automatically descend again to the side of the users that have yet to pass the check point.

2. Apparatus for the movement of containers according to previous claim, **characterised in that** each of said tracks (11, 12) has two parallel lane rollers (10), each extending for a width less than half of the width of the respective track and substantially displaced distanced between them.

## Patentansprüche

1. Vorrichtung zur Bewegung von Behältern an einem Personenkontrollpunkt mit Rollen (10), **gekennzeichnet dadurch, dass:**
i - sie aus zwei Bahnen besteht, eine (11) oberhalb der anderen (12);
ii - die obere Bahn (11) in einem Neigungswert x geneigt ist, so dass der Widerstand gegen die Strömung der Rollen (10) von besagter X-Neigung derart überschritten wird, dass ein Behälter (2), der oberhalb der geneigten Bahn (11) plaziert und in einer vorgeschalteten Position (B) freigelassen wird, automatisch nach unten (A) zum freien Fluss unter Schwerkraft bewegt wird,
iii. - der Abstand zwischen den beiden Bahnen höher ist als die Höhe des betreffenden Behälters (2), der bewegt werden soll.
iv. - besagte obere Bahn (11) auf einer Seite (B) in bezug auf die untere Bahn (12) hervorragt.
v. - der Vorsprung der oberen Bahn (11) sich an der Kontrollpunktgebiet-Seite befindet, während die Gegenseite mindestens über den Kontrollpunktgebiet hinaus erweitert ist.
vi. - die obere Bahn (11) hat Stützpfosten nur auf einer Seite, zumindestens in dem Gebiet, das auch von der unteren Bahn (12) betroffen ist, um einen absolut freien Zugang ohne Pfosten in dem Gebiet zwischen der unteren Bahn (12) und der oberen Bahn (11) zu lassen.
vii. - an der Benutzerseite, und zwar außerhalb des Kontrollpunktgebiets (A), liegen die beiden Köpfe der Bahnen (11,12).
viii. - die Höhe der unteren Bahn (12) ist im wesentlichen von gleicher Höhe wie die Einlassbahn für die Behälter (2) in das Förderband der Kontrollstation mit Röntgenstrahlen, um das persönliche Eigentum zu überprüfen, das in dem Behälter (2) enthalten ist.
ix. - wobei die Positionierung der besagten Bahnen (11,12) mit dem Kontrollpunkt und ihre Funktionsweise derart konzipiert sind, dass:
a) vor dem Kontrollpunkt der Benutzer einen der leeren Behälter (2) von der oberen Bahn (11) nehmen und ihn auf die waagrechte untere Bahn (12) setzen, sein persönliches Eigentum hineinlegen und mit ihm zum Eingang des Bandförderers der Röntgen-Kontrollinie gehen kann;
b) wenn der Behälter (2) von der Beladungsseite des Flughafens herangekommen ist und vom Benutzer geleert wurde, braucht das Kontrollpersonal den Behälter (2) nur auf die geneigte obere Bahn (11, Seite B) zu legen, und der leere Behälter wird automatisch wieder zu der Seite derjenigen Benutzer herabkommen, die noch durch den Kontrollpunkt gehen müssen.

2. Vorrichtung zur Bewegung von Behältern nach dem vorherigen Anspruch, **gekennzeichnet dadurch, dass** jede Bahn (11, 12) zwei parallele Spurrollen (10) besitzt, die jede über eine Breite verlaufen, die weniger als die Hälfte der Breite der betreffenden Bahn beträgt, und im wesentlichen beabstandet zwischen ihnen angeordnet sind.

## Revendications

1. Dispositif pour le déplacement de récipients à un contrôle d'accès de personnes du type à rouleaux (10), **caractérisé en ce que :**
i - il consiste en deux pistes, l'une (11) au-dessus de l'autre (12);
ii - la piste supérieure (11) est inclinée avec une valeur d'inclinaison "X" de manière à ce que la résistance à la circulation des rouleaux (10) soit excédée par ladite inclinaison "X" de façon à ce qu'un récipient (2) placé au-dessus de ladite piste inclinée (11), et laissé libre dans une position en amont (B), soit automatiquement déplacé vers le bas (A) pour la circulation libre par gravité,
iii. - la distance entre les deux pistes est supérieure à la hauteur du récipient respectif (2) qui doit être déplacé.
iv. - ladite piste supérieure (11) saille d'un côté (B) par rapport à la piste inférieure (12).
v. - la saillie de la piste supérieure (11) est du côté de la zone de contrôle, tandis que le côté opposé s'étend au moins au-delà de la zone de contrôle.
vi. - ladite piste supérieure (11) a des colonnes de support seulement d'un côté au moins dans la zone concernée également avec la piste inférieure (12), afin de laisser l'accès absolument libre sans colonnes dans la zone entre la piste inférieure (12) et la piste supérieure (11).
vii. - du côté de l'utilisateur, c'est-à-dire externe à la zone de contrôle (A), se trouvent les deux têtes desdites pistes (11,12).
viii. - la hauteur de la piste inférieure (12) est substantiellement de la même hauteur que la piste d'entrée desdits récipients (2) dans la piste de tapis roulant de la station de contrôle à rayons X pour contrôler les objets personnels contenus dans ledit récipient (2).
ix. - le positionnement desdites pistes (11,12) avec le point de contrôle et l'opération étant conçus de façon à ce que :
a) avant le point de contrôle l'utilisateur peut prendre l'un des récipients vides (2) de la piste supérieure (11) et le déplacer sur la piste horizontale inférieure (12), y déposer ses objets personnels, et l'accompagner jusqu'à l'entrée du tapis roulant de la ligne de contrôle à rayons X ;
b)- une fois que le récipient (2) est passé du côté du chargement de l'aéroport et est vidé par l'utilisateur, l'opérateur de contrôle désigné doit seulement mettre le récipient (2) sur la piste inclinée supérieure (11, côté B) et le récipient vide redescendra vers le côté des utilisateurs qui doivent encore passer le point de contrôle.

2. Dispositif pour le mouvement des récipients conformément à la revendication précédente, **caractérisé en ce que** chacune desdites pistes (11, 12) a des rouleaux disposés en deux voies parallèles (10), chacun des rouleaux s'étendant sur une largeur de moins de moitié de la largeur de la piste respective et étant substantiellement déplacés distancés entre eux.
